# EUROPEAN PATENT SPECIFICATION

(11) **EP 0 737 615 B1**
(45) Date of publication and mention of the grant of the patent: **10.05.2000**
(21) Application number: 96105598.5
(22) Date of filing: 09.04.1996
(51) Int. Cl.: B62K 25/28, B62K 11/10

(54) **Swing arm structure for vehicle suspension**
Schwingarmstruktur für Fahrzeugaufhängung
Structure de bras oscillant pour suspension de véhicule

(30) Priority: 11.04.1995 JP 8504095
(43) Date of publication of application: 16.10.1996
(73) Proprietor: HONDA GIKEN KOGYO KABUSHIKI KAISHA, Minato-ku Tokyo (JP)
(72) Inventor: Maeda, Tadayuki, Wako-shi, Saitama (JP); Suzuki, Yoshihiko, Wako-shi, Saitama (JP)
(74) Representative: Liska, Horst, Dr.-Ing.

(56) References cited:
- EP-A- 0 303 408
- FR-A- 1 076 097
- JP-U- 62 036 984
- PATENT ABSTRACTS OF JAPAN vol. 015, no. 407 (M-1169), 17 October 1991 & JP 03 167093 A (SUZUKI MOTOR CORP), 18 July 1991,

## Description

The present invention relates to a vehicle according to the preamble of claim 1.

Such a vehicle is known from Japanese Utility Model Laid-open No. Sho 62-36984, for example.

In such a vehicle, a transmission case and a vehicle body are connected together by one of a pair of rear suspensions located on the right and left sides of a rear wheel, and a swing arm and a vehicle frame are connected together by the other rear suspension. The lateral thickness of the transmission case storing a transmission therein is larger than the lateral thickness of the swing arm. Accordingly, in designing to locate the right and left rear suspensions symmetrically with each other with respect to the rear wheel, a rear suspension supporting portion of the swing arm must be projected outward of the vehicle body more than a body portion of the swing arm. However, if the rear suspension supporting portion is projected outward of the vehicle body by increasing the wall thickness of the swing arm, the weight of the swing arm is increased to cause an increase in moment of inertia of the swing unit.

It is accordingly an object of the present invention to ensure the rigidity of the swing arm and reduce the weight of the swing arm.

To achieve the above object, the invention as defined in claim 1 is characterized by the features according to the characterizing part of claim 1.

According to the configuration of claim 1, the lower end of one of the two rear suspensions is connected to the rear suspension supporting portion bent to project outward of the vehicle body from the body portion of the swing arm. Accordingly, the one rear suspension and the other rear suspension connected to the transmission case on the opposite side of the one rear suspension with respect to the laterally central line of the vehicle body can be located symmetrically in the lateral direction of the vehicle body. Further, the rear suspension supporting portion is reinforced by the front reinforcing rib. Accordingly, as compared with the case where the lateral thickness of the swing arm as a whole is increased to project the rear suspension supporting portion outward of the vehicle body, the weight of the swing arm can be reduced and sufficient rigidity of the swing arm can be ensured.

Accordingly, an increase in weight of the swing arm and a reduction in rigidity of the swing arm can be prevented, and the right and left rear suspensions can be located substantially symmetrically with respect to the laterally central line of the vehicle body.

The invention as defined in claim 2 inclusive of the configuration of claim 1 is characterized by the additional features of claim 2.

According to the configuration of claim 2, the rear reinforcing rib formed on the rear side of the axle can firmly reinforce the rear suspension supporting portion with the interference between the reinforcing ribs and the axle being avoided.

Accordingly, the rear suspension supporting portion can be firmly reinforced with the interference between the reinforcing ribs and the axle being avoided.

The invention as defined in claim 3 inclusive of the configuration of claim 1 is characterized in that a distance between the front reinforcing rib and a muffler provided along an outside surface of the swing arm is set smaller than a distance between the muffler and an outer end of the axle projecting from the outside surface of the swing arm.

According to the configuration of claim 3, even when the muffler provided along the outside surface of the swing arm vibrates in the lateral direction of the vehicle body, the contact between the muffler and the axle can be reliably avoided by making the muffler into contact with the reinforcing rib.

Preferred embodiments of the present invention will now be described with reference to the drawings.

FIG. 1 is a left side view of a motorcycle according to a first preferred embodiment of the invention.

FIG. 2 is an enlarged view of an essential part in FIG. 1.

FIG. 3 is an enlarged view of an essential part of the motorcycle as viewed from the right side thereof.

FIG. 4 is an enlarged cross section taken along the line 4-4 in FIG. 2.

FIG. 5 is a view taken in the direction of the arrow 5 in FIG. 3.

FIG. 6 is a side view of a swing arm.

FIG. 7 is a cross section taken along the line 7-7 in FIG. 6.

FIG. 8 is an enlarged view of an essential part of the vehicle body as viewed from the right side thereof, according to a second preferred embodiment.

FIG. 9 is a cross section taken along the line 9-9 in FIG. 8.

FIG. 10 is a side view of a swing arm.

FIG. 11 is a cross section taken along the line 11-11 in FIG. 10.

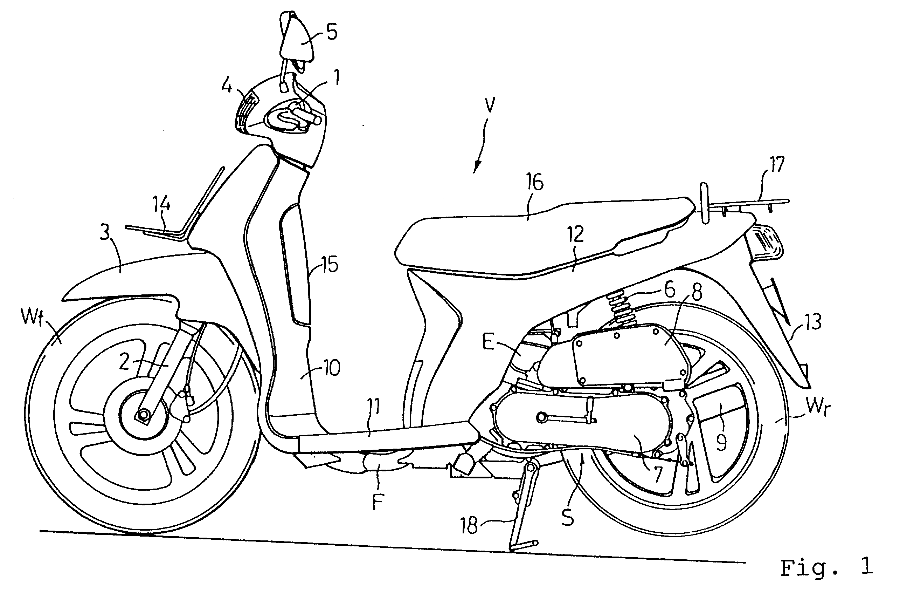

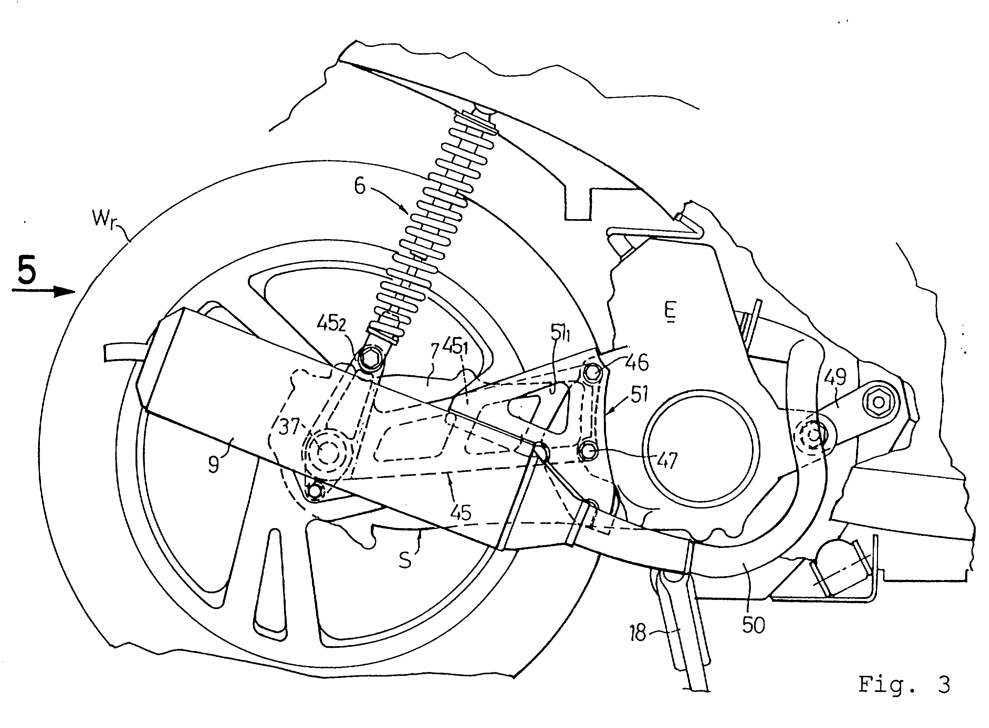

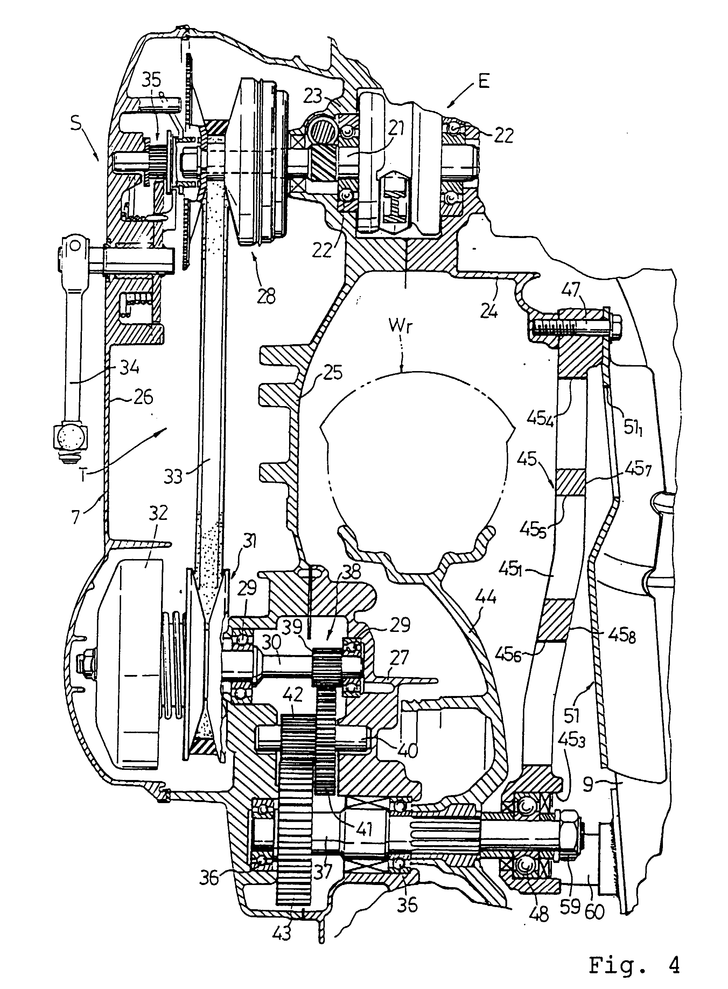

FIGS. 1 to 7 show a first preferred embodiment of the present invention.

As shown in FIG. 1, a scooter type motorcycle V includes a front wheel Wf and a rear wheel Wr at the front and rear portions of a vehicle body. The front wheel Wf is rotatably supported through an axle to the lower ends of a front fork 2 adapted to be turned to the right or the left by a steering handle 1. The upper side of the front wheel Wf is covered with a front fender 3. The steering handle 1 is provided with a headlight 4 and a rearview mirror 5. A swing unit S is vertically swingably supported to the vehicle body and is suspended by a pair of right and left rear suspensions 6. The swing unit S includes at its front portion an engine E and at its rear portion a transmission case 7. The rear wheel Wr is rotatably supported through an axle to the rear end of the transmission case 7. An air cleaner 8 is provided on the left side of the swing unit S, and a muffler 9 is provided on the right side of the swing unit S.

Supported to a vehicle frame F are a leg shield 10 for covering the front side of rider's legs, a floor panel 11 for supporting rider's feet, a rear cover 12 for covering the rear portion of the vehicle body, and a rear fender 13 for covering the upper side of the rear wheel Wr. A front carrier 14 and a front pocket 15 are provided on the front surface and the rear surface of the leg shield 10, respectively. A seat 16 and a rear carrier 17 are provided on the upper surface of the rear cover 12 at its front portion and rear portion, respectively. A main stand 18 is provided at the lower portion of the vehicle frame F.

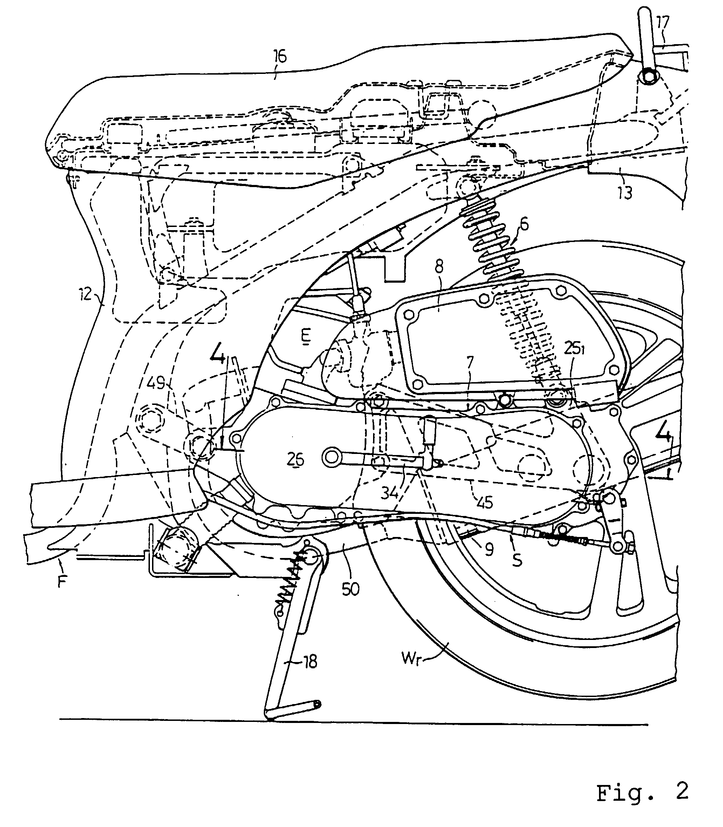

The structure of the swing unit S will now be described with reference to FIGS. 2 to 4.

The engine E includes a left crankcase half 23 and a right crankcase half 24 for supporting both end portions of a crankshaft 21 through a pair of ball bearings 22. A transmission case body 25 for storing a belt type continuously variable transmission T is formed integrally with the rear portion of the left crankcase half 23. A transmission case cover 26 is connected to a left open end of the transmission case body 25, and a speed reducer cover 27 is connected to the right side surface of the transmission case body 25 at its rear portion.

The belt type continuously variable transmission T stored in the space defined by the transmission case body 25 and the transmission case cover 26 includes a drive pulley 28 mounted on the left end of the crankshaft 21 as an input shaft and having a groove whose width is variable by a centrifugal force, an output shaft 30 supported through a pair of ball bearings 29 to the transmission case body 25 and the speed reducer cover 27, a driven pulley 31 mounted on the output shaft 30 so as to be rotatable relative thereto, an automatic centrifugal clutch 32 mounted on the output shaft 30 and capable of connecting the driven pulley 31 to the output shaft 30, and an endless belt 33 wrapped between the drive pulley 28 and the driven pulley 31. The transmission case cover 26 is provided with a kick starter 35 having a kick pedal 34.

An axle 37 of the rear wheel Wr is supported through a pair of ball bearings 36 to the transmission case body 25 and the speed reducer cover 27. The axle 37 is connected through a speed reducer 38 to the output shaft 30. The speed reducer 38 is stored in the space defined between the transmission case body 25 and the speed reducer cover 27, and includes a first gear 39 mounted on the output shaft 30, a second gear 41 and a third gear 42 both mounted on an intermediate shaft 40, and a fourth gear 43 mounted on the axle 37. A wheel 44 of the rear wheel Wr is splined to a portion of the axle 37 projecting rightward from the speed reducer cover 27.

The swing unit S has a highly rigid box structure formed by the engine E on the front side, the axle 37 on the rear side, the transmission case 7 on the left side, and the swing arm 45 on the right side. The front end of the swing unit S is vertically pivotably supported through a link 49 to the vehicle frame F.

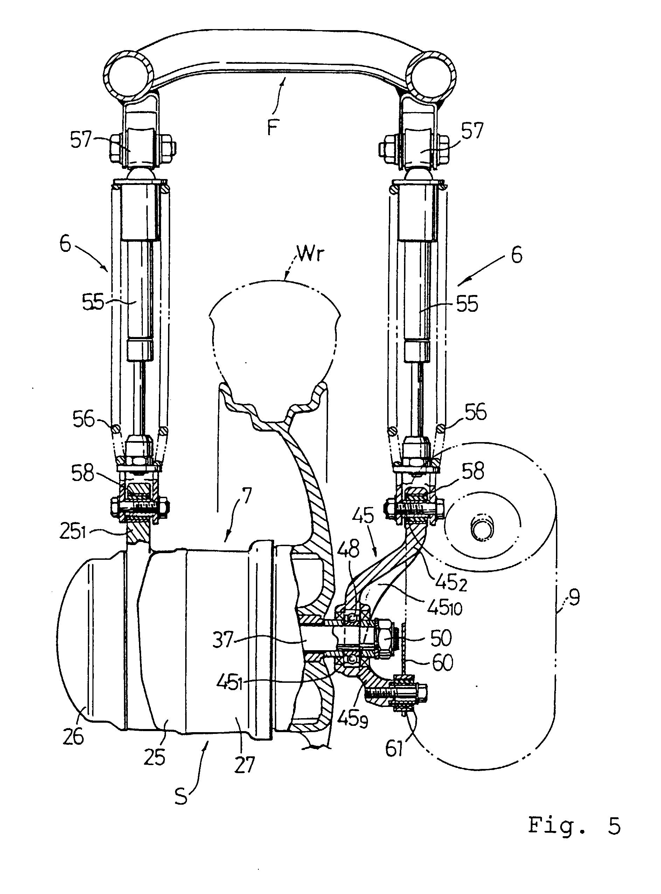

As apparent from FIG. 5 in particular, the transmission case 7 is disposed on the left side of a laterally central plane of the vehicle body, that is, on the left side of an axially central plane of the rear wheel Wr, and the swing arm 45 is disposed on the right side of the laterally central plane of the vehicle body. Each of the right and left rear suspensions 6 is composed of a shock absorber 55 and a coil spring 56 surrounding the shock absorber 55. The right and left rear suspensions 6 are symmetrically located on the right and left sides of the rear wheel Wr. The upper end of the left rear suspension 6 is connected through a rubber bushing joint 57 to the vehicle frame F, and the lower end of the left rear suspension 6 is connected through a rubber bushing joint 58 to a rear suspension supporting portion 25₁ formed on the transmission case body 25. On the other hand, the upper end of the right rear suspension 6 is connected through a rubber bushing joint 57 to the vehicle frame F, and the lower end of the right rear suspension 6 is connected through a rubber bushing joint 58 to a rear suspension supporting portion 45₂ projecting from a body portion 45₁ of the swing arm 45.

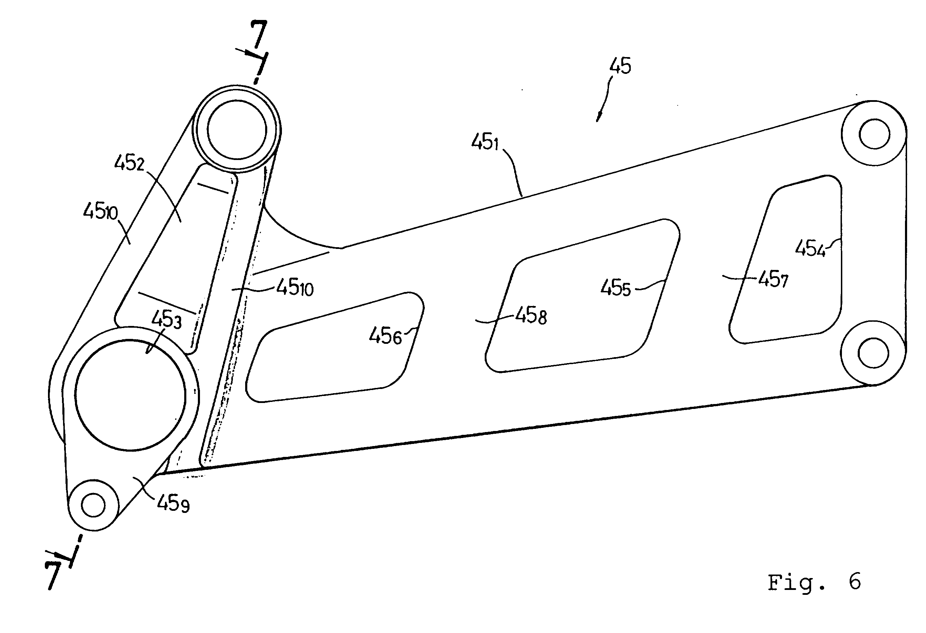

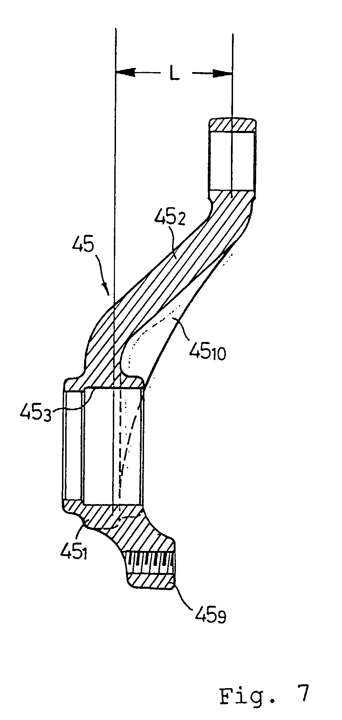

As apparent from FIGS. 6 and 7 in particular, the swing arm 45 is a platelike member integrally formed by aluminum die casting. The body portion 45₁ is connected at its front end to the right crankcase half 24 of the engine E by a pair of upper and lower bolts 46 and 47. The right end of the axle 37 is supported through a ball bearing 48 in an axle supporting hole 45₃ formed at the rear end of the body portion 45₁, and is prevented from escaping by a bolt 59. The swing arm 45 is formed with three openings 45₄, 45₅, and 45₆ arranged in the longitudinal direction. The three openings 45₄ to 45₆ are isolated from each other by two columns 45₇ and 45₈ inclined frontward at their upper portions. The front opening 45₄ has a substantially triangular shape, and the central and rear openings 45₅ and 45₆ have a substantially parallelogrammic shape.

The rear suspension supporting portion 45₂ projects upward from the upper portion of the axle supporting hole 45₃ formed at the rear end of the body portion 45₁ of the swing arm 45. A muffler supporting portion 45₉ projects downward from the lower portion of the axle supporting hole 45₃. The rear suspension supporting portion 45₂ is bent outward of the vehicle body as viewed in rear elevation in such a manner as to be offset by a distance L to the outside of the vehicle body. The outside surface of the swing arm 45 is integrally formed with two reinforcing ribs 45₁₀ extending from the front and rear portions of the axle supporting hole 45₃ formed in the body portion 45₁ along the front and rear edges of the rear suspension supporting portion 45₂.

The muffler 9 is connected at its front end to the rear end of an exhaust pipe 50 extending from the engine E to the right side of the vehicle body. A triangular mounting stay 51 is welded to the front portion of the muffler 9. The mounting stay 51 is secured to the engine E with the swing arm 45 by the two bolts 46 and 47 connecting the swing arm 45 to the engine E. Thus, the muffler 9 can be supported with a reduced number of parts. The mounting stay 51 is formed with a triangular opening 51₁. Further, a mounting stay 60 welded to the rear portion of the muffler 9 is supported through a rubber bushing joint 61 to the muffler supporting portion 45₉ formed at the rear end of the swing arm 45.

As mentioned above, the swing arm 45 and the mounting stay 51 both disposed along the right side surface of the transmission case 7 have the openings 45₄ to 45₆ and 51₁, respectively. Accordingly, there hardly occurs the resonance of engine sound and vehicle running sound in the space surrounded by the transmission case 7 and the swing arm 45, thereby reducing noise due to the resonance. Furthermore, the front end of the swing arm 45 is connected to the engine E by the two, upper and lower bolts 46 and 47, thereby enough ensuring the rigidity against a vertical load input from the rear wheel Wr. In addition, the swing arm 45 has a ladder-like configuration formed by the three openings 45₄ to 45₆ and the two columns 45₇ and 45₈, thereby reducing the weight of the swing arm 45 owing to the lightening effect by the openings 45₄ to 45₆ and simultaneously obtaining high rigidity of the swing arm 45.

Further, the rear suspension supporting portion 45₂ reinforced by the two reinforcing ribs 45₁₀ is projected outward of the vehicle body from the body portion 45₁ of the swing arm 45, and the lower end of the right rear suspension 6 is connected to the rear suspension supporting portion 45₂. Accordingly, the right and left rear suspensions 6 can be located symmetrically with respect to the laterally central plane of the vehicle body. Moreover, an increase in weight of the swing arm 45 can be minimized to thereby prevent an increase in moment of inertia of the swing unit S, and the rigidity of the rear suspension supporting portion 45₂ can also be ensured. In addition, since the two reinforcing ribs 45₁₀ are located on the front and rear sides of the axle supporting hole 45₃, the rigidity of the rear suspension supporting portion 45₂ can be enough improved with the interference between the axle 37 and the reinforcing ribs 45₁₀ being avoided.

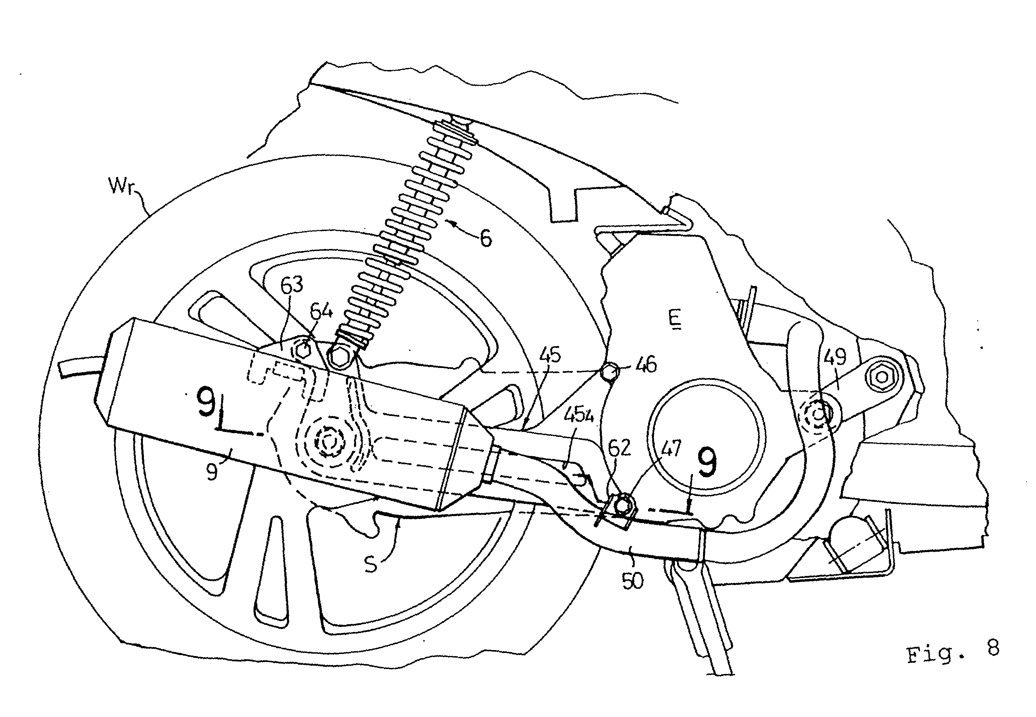

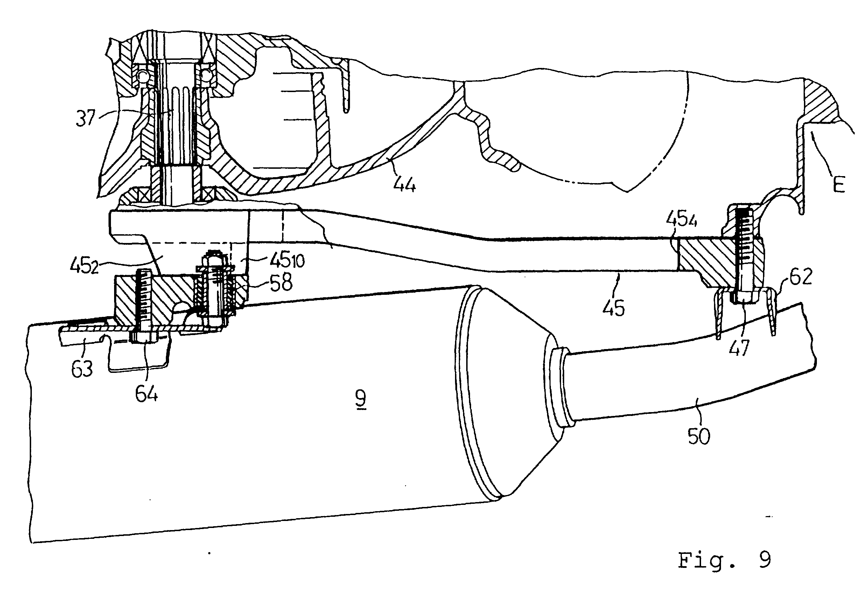

FIGS. 8 to 11 show a second preferred embodiment of the present invention.

A body portion 45₁ of a swing arm 45 in the second preferred embodiment has a single opening 45₄ elongated in the longitudinal direction of the vehicle body. As similar to the first preferred embodiment, the formation of the opening 45₄ can prevent that the resonance of engine sound and vehicle running sound may occur in the space surrounded by the transmission case 7 and the swing arm 45, thereby preventing noise due to the resonance.

The body portion 45₁ of the swing arm 45 is formed at its rear end with a rear suspension supporting portion 45₂ projecting outward of the vehicle body. The outside surface of the rear suspension supporting portion 45₂ is integrally formed with a single reinforcing rib 45₁₀ extending from the front side of an axle supporting hole 45₃ along the front edge of the rear suspension supporting portion 45₂. The lower end of the right rear suspension 6 is connected through a rubber bushing joint 58 to the upper end of the rear suspension supporting portion 45₂.

The front end of the swing arm 45 is fixed to the engine E by two, upper and lower bolts 46 and 47, and a mounting stay 62 provided on the exhaust pipe 50 is secured to the swing arm 45 by the lower bolt 47. A mounting stay 63 welded to the muffler 9 is fixed by a bolt 64 to a muffler supporting portion 45₉ projecting rearward from the upper end of the rear suspension supporting portion 45₂ of the swing arm 45. In this manner, the exhaust pipe 50 and the muffler 9 are supported to the front portion and the rear portion of the swing arm 45, respectively, thereby firmly supporting the exhaust system.

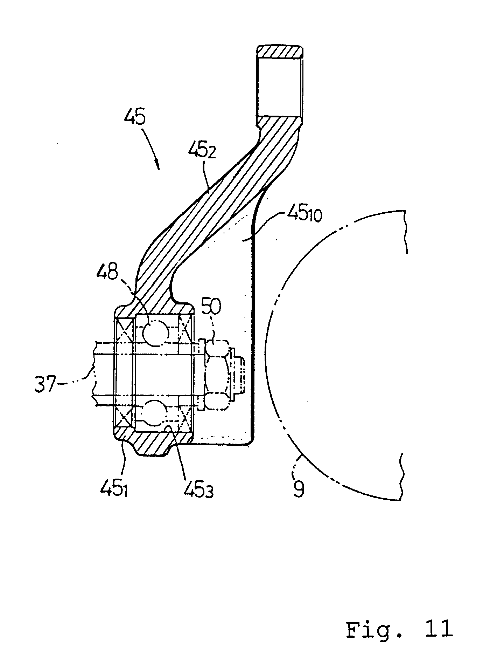

As apparent from FIG. 11, the right end of the axle 37 supported through the ball bearing 48 in the axle supporting hole 45₃ of the swing arm 45 projects rightward from the body portion 45₁ of the swing arm 45. However, the outer edge of the reinforcing rib 45₁₀ further extends rightward from the right end of the axle 37. Accordingly, even when the muffler 9 vibrates in the lateral direction, it is blocked by the reinforcing rib 45₁₀ to thereby prevent damage to the axle 37.

Having thus described specific embodiments of the present invention, it is to be noted that various modifications in design may be made without departing from the scope of the present invention as defined by the claims.

For example, the forming method for the swing arm 45 is not limited to die casting, but it may include forging and pressing.

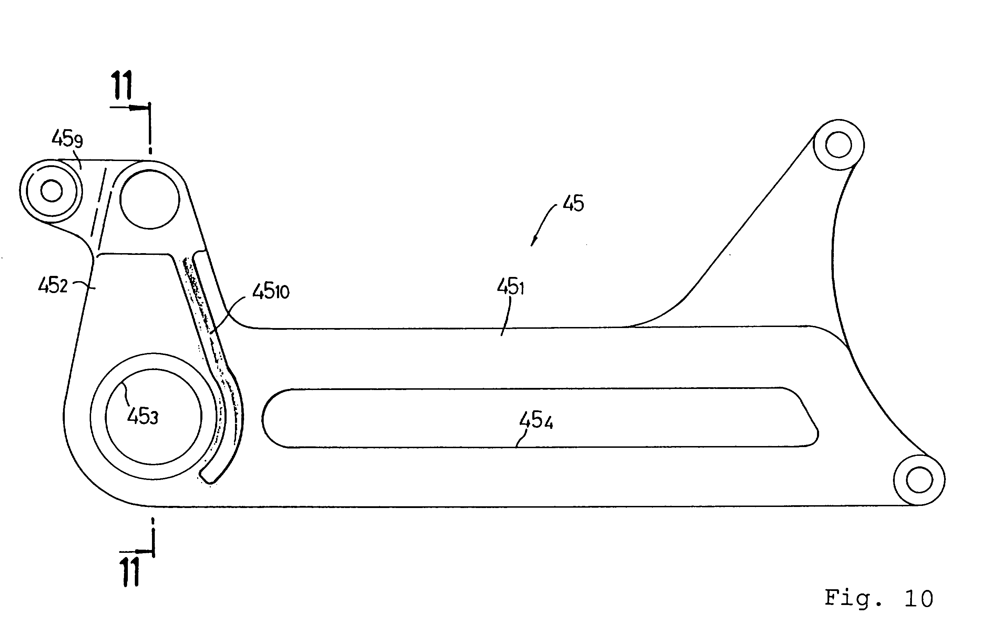

As shown in Fig. 10, to realize a reduction in weight and an increase in rigidity of a swing arm 45 for supporting an axle of a rear wheel in cooperation with a transmission case suspended from a vehicle body by one of two rear suspensions and supporting one end of the axle, the swing arm 45 supporting the other end of the axle and being suspended from the vehicle body by the other rear suspension located symmetrically with the one rear suspension with respect to the laterally central line of the vehicle body.

An axle supporting hole 45₃ is formed at the rear end of a body portion 45₁ of the swing arm 45. A rear suspension supporting portion 45₂ is formed on the upper side of the axle supporting hole 45₃ so as to project upward and outward of the vehicle body. The lower end of the other rear suspension is connected to the upper end of the rear suspension supporting portion 45₂. The rear suspension supporting portion 45₂ is integrally formed with a reinforcing rib 45₁₀ extending from the front side of the axle supporting hole 45₃ along the front edge of the rear suspension supporting portion 45₂.

## Claims

1. A vehicle comprising:
- a vehicle frame (F);
- a swing unit comprising
a rear wheel (Wr) having an axle (37) supported between a transmission case (7) and a swing arm (45) both vertically pivotably supported on said vehicle frame (F)
wherein said transmission case (7) and said swing arm (45) are further connected to sajd vehicle frame (F) through a pair of right and left rear suspensions (6) located substantially symmetrically with each other on right and left sides of said rear wheel (Wr);
said swing arm (45) having a body portion (45₁) and a rear suspension supporting portion (45₂) connected to a lower end of one of said rear suspensions (6); and
said swing arm (45) being integrally formed with a front reinforcing rib (45₁₀) extending from said body portion (45₁) along a front edge of said rear suspension supporting portion (45₂),
characterized in
that said rear suspension supporting portion (45₂) is bent to project outward of the body of said vehicle from said body portion (45₁) of said swing arm (45), and
that said front reinforcing rib (45₁₀) is provided on the outward surface of said swing arm (45) only and extends to the front side of an axle supporting hole (45₃) formed in said body portion (45₁).

2. A vehicle according to claim 1,
characterized in
that said swing arm (45) is further integrally formed with a rear reinforcing rib (45₁₀) extending along a rear edge of said rear suspension supporting portion (45₂) to the rear side of said axle supporting hole (45₃).

3. A vehicle according to claim 1,
characterized in
that a distance between said front reinforcing rib (45₁₀) and a muffler (9) provided along an outside surface of said swing arm (45) is set smaller than a distance between said muffler (9) and an outer end of said axle (37) projecting from the outside surface of said swing arm (45).

## Patentansprüche

1. Fahrzeug, umfassend:
- einen Fahrzeugrahmen (F);
- eine Schwingeinheit, umfassend
ein Hinterrad (Wr) mit einer Achse (37), welche zwischen einem Getriebegehäuse (7) und einem Schwingarm (45) gelagert ist, welche beide schwenkbar an dem Fahrzeugrahmen (F) gelagert sind, wobei das Getriebegehäuse (7) und der Schwingarm (45) ferner mit dem Fahrzeugrahmen (F) über ein Paar von rechten und linken hinteren Aufhängungen (6) verbunden sind, welche im wesentlichen symmetrisch zueinander an der rechten und linken Seite des Hinterrads (Wr) angeordnet sind;
wobei der Schwingarm (45) einen Körperabschnitt (45₁) und einen hinteren Aufhängungs-Lagerabschnitt (45₂) aufweist, welcher mit einem unteren Ende der hinteren Aufhängungen (6) verbunden ist; und
wobei der Schwingarm (45) integral mit einer vorderen Verstärkungsrippe (45₁₀) versehen ist, welche sich von dem Körperabschnitt (45₁) entlang eines vorderen Randes des hinteren Aufhängungs-Lagerabschnitts (45₂) erstreckt,
dadurch gekennzeichnet,
daß der hintere Aufhängungs-Lagerabschnitt (45₂) derart gekrümmt ist, daß er von dem Körper des Fahrzeugs von dem Körperabschnitt (45₁) des Schwingarms (45) nach außen vorsteht, und
daß die vordere Verstärkungsrippe (45₁₀) lediglich an der Außenfläche des Schwingarms (45) vorgesehen ist und sich zu der Vorderseite eines Achslagerungslochs (45₃) erstreckt, welches in dem Körperabschnitt (45₁) ausgebildet ist.

2. Fahrzeug nach Anspruch 1,
dadurch gekennzeichnet,
daß der Schwingarm (45) ferner integral mit einer hinteren Verstärkungsrippe (45₁₀) ausgebildet ist, welche sich entlang eines hinteren Randes des hinteren Aufhängungs-Lagerabschnitts (45₂) zu der Rückseite des Achslagerungslochs (45₃) erstreckt.

3. Fahrzeug nach Anspruch 1,
dadurch gekennzeichnet,
daß ein Abstand zwischen der vorderen Verstärkungsrippe (45₁₀) und einem entlang einer Außenfläche des Schwingarms (45) vorgesehenen Auspuffs (9) kleiner festgelegt ist als ein Abstand zwischen dem Auspuff (9) und einem äußeren Ende der Achse (37), welche von der Außenfläche des Schwingarms (45) vorsteht.

## Revendications

1. Véhicule comprenant :
un châssis de véhicule (F) ;
une unité oscillante comprenant une roue arrière (Wr) ayant un essieu (37) supporté entre un carter d'engrenage (7) et un bras oscillant (45) tous les deux supportés de façon pivotante verticalement sur ledit châssis de véhicule (F)
dans lequel ledit carter d'engrenage (7) et ledit bras oscillant (45) sont reliés en outre audit châssis de véhicule (F) grâce à deux suspensions arrière droite et gauche (6) situées sensiblement symétriquement l'une par rapport à l'autre sur des côtés droit et gauche de ladite roue arrière (Wr) ;
ledit bras oscillant (45) ayant une partie formant corps (45₁) et une partie supportant la suspension arrière (45₂) reliée à une extrémité inférieure de l'une desdites suspensions arrière (6) ; et
ledit bras oscillant (45) étant formé d'une seule pièce avec une nervure de renforcement avant (45₁₀) s'étendant depuis ladite partie formant corps (45₁) le long d'un bord avant de ladite partie supportant la suspension arrière (45₂),
caractérisé en ce que ladite partie supportant la suspension arrière (45₂) est courbée pour faire saillie vers l'extérieur du corps dudit véhicule à partir de ladite partie formant corps (45₁) dudit bras oscillant (45), et
en ce que ladite nervure de renforcement avant (45₁₀) est prévue sur la surface extérieure dudit bras oscillant (45) seulement et s'étend vers le côté avant d'un trou supportant un essieu (45₃) formé dans ladite partie formant corps (45₁).

2. Véhicule selon la revendication 1, caractérisé en ce que ledit bras oscillant (45) est en outre formé d'une seule pièce avec une nervure de renforcement arrière (45₁₀) qui s'étend le long d'un bord arrière de ladite partie supportant la suspension arrière (45₂) vers le côté arrière dudit trou supportant l'essieu (45₃).

3. Véhicule selon la revendication 1, caractérisé en ce qu'une distance existant entre ladite nervure de renforcement avant (45₁₀) et un pot d'échappement (9) prévu le long d'une surface externe dudit bras oscillant (45) est établie plus petite qu'une distance existant entre ledit pot d'échappement (9) et une extrémité externe dudit essieu (37) qui fait saillie à partir de la surface externe dudit bras oscillant (45).
